# EUROPEAN PATENT APPLICATION

(11) **EP 3 269 219 A1**
(43) Date of publication of application: **17.01.2018**
(21) Application number: 15794811.8
(22) Date of filing: 25.08.2015
(51) Int. Cl.: A01B 33/10

(54) **TILLING CLAW**

(30) Priority: 06.03.2015 JP 2015044213
(71) Applicant: Taiyo Co., Ltd., Kochi 781-5101 (JP)
(72) Inventor: MORI Shinji, Kochi-shi Kochi 781-5101 (JP); YAMASAKI Yasuyuki, Kochi-shi Kochi 781-5101 (JP); KIRAGAWA Tetsurou, Kochi-shi Kochi 781-5101 (JP); SANNOMIYA Toyoaki, Kochi-shi Kochi 781-5101 (JP); YAMASAKI Yuuji, Kochi-shi Kochi 781-5101 (JP)
(74) Representative: Bailey, Sam Rogerson
(86) International application number: PCT/JP2015/073768
(87) International publication number: WO 2016/143161

(57) **Abstract**

A tillage tine includes: a base portion (1) that is fitted to a flange (SO) of a rotary tine shaft (S); a vertical blade portion (2) that is formed from a planar plate that extends continuously in a lateral direction from the base portion (1) in side view to a lateral blade curve start portion (G), and includes a cutting edge via a step from a lower edge of the base portion (1); and a lateral blade portion (3) that extends continuously with the lateral blade curve start portion (G) as a boundary, is formed by including a width dimension not less than a width dimension of the base portion (1) to a distal end (I) side, is formed by gradually curving to an upper side in side view, and is formed from a curved plate that is curved on one side with the lateral blade curve start portion (G) as the boundary, wherein the lateral blade portion (3) is curved so as to form an obtuse angle in cross-section view orthogonal to the lateral blade curve start portion (G), and the distal end (I) of the lateral blade portion (3) before curving includes a first region (I1) which extends upward from a lower end (I3) of the lateral blade portion (3), and a second region (12) which is continuous from the first region (I1), and is curved or bent in an inward direction to extend to an upper end (I5). Consequently, a tillage tine which suppresses a load fluctuation during driving into soil, reduces tilling vibration or horsepower consumption, and is excellent in a throwing force, reversibility, and a deep tillage performance is provided.

## Description

### Technical Field

The present invention relates to a tillage tine for tilling soil.

### Background Art

As the shape of a conventional tillage tine, for example, in Japanese Patent No. 5633830, as illustrated in Figure 8, a tillage tine that includes a base portion 1 that is fitted to a flange S0 of a rotary tine shaft S; a vertical blade portion 2 that is formed from a planar plate that extends continuously in a lateral direction from the base portion 1 in side view to a lateral blade curve start portion G when a surface having a rotation axis of the rotary tine shaft S as a normal line is set as a side surface, and includes a cutting edge that is formed at a lower side via a step from a lower edge of the base portion 1; and a lateral blade portion 3 that extends continuously from the vertical blade portion 2 with the lateral blade curve start portion G as a boundary, is formed by including a width dimension not less than a width dimension of the base portion 1 from the vertical blade portion 2 to a distal end I side, is formed by gradually curving to an upper side in side view, and is formed from a curved plate that is curved on one side with the lateral blade curve start portion G as the boundary, wherein the lateral blade portion 3 is curved at a substantially right angle α in sectional view orthogonal to the lateral blade curve start portion G, and the lateral blade curve start portion G comprises a circular arc with a bending radius with a bending center that is provided at a lower side from a substantially central portion position of a base portion width D in the base portion 1, as the center.

### Summary of Invention

### Technical Problem

However, in the above tillage tine, the lateral blade portion 3 is curved at the substantially right angle α in the sectional view orthogonal to the lateral blade curve start portion G, and therefore is excellent in a fine soil property to soil. However, a large load is fluctuated when driving into soil is performed, and therefore there is a problem in increase of tilling vibration or horsepower consumption.

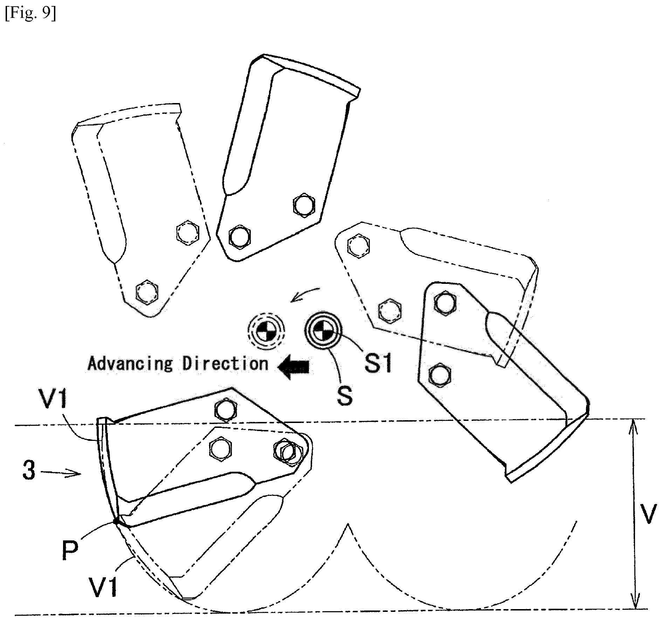

Additionally, as illustrated in Figure 9, in tilling work in a case where a tilling pitch increases in soil whose tilling depth V is relatively deep, for example, 10 cm to 15 cm, (for example, in a case where a speed in an advancing direction in which a tiller advances becomes faster without changing the number of rotations of the rotary tine shaft (4 km/h to 6 km/h)), an outside surface of the lateral blade portion 3 comes into contact with a plow sole surface V1 after soil cutting, which is formed by a blade edge tip P of the lateral blade portion 3 in the tillage tine during the tilling work. This also causes the increase in the tilling vibration, which causes a problem also in a deep tilling property.

The present invention solves such problems, and an object of the present invention is to provide a tillage tine which suppresses load fluctuation during driving into soil, reduces tilling vibration or horsepower consumption, and is excellent in a throwing force, reversibility, and a deep tilling property.

### Solution to Problem

In order to solve the above problems, a tillage tine recited in claim 1 of the present invention includes: a base portion that is fitted to a flange of a rotary tine shaft; a vertical blade portion that is formed from a planar plate that extends continuously in a lateral direction from the base portion in side view to a lateral blade curve start portion when a surface having a rotation axis of the rotary tine shaft as a normal line is set as a side surface, and includes a cutting edge that is formed at a lower side via a step from a lower edge of the base portion; and a lateral blade portion that extends continuously from the vertical blade portion with the lateral blade curve start portion as a boundary, is formed by including a width dimension not less than a width dimension of the base portion from the vertical blade portion to a distal end side, is formed by gradually curving to an upper side in side view, and is formed from a curved plate that is curved on one side with the lateral blade curve start portion as the boundary, wherein the lateral blade portion is curved so as to form an obtuse angle in cross-section view orthogonal to the lateral blade curve start portion, and the distal end of the lateral blade portion before curving includes a first region which extends upward from a lower end of the lateral blade portion, and a second region which is continuous from the first region, and is curved or bent in an inward direction to extend to an upper end.

According to a tillage tine recited in claim 2 of the present invention, in the tillage tine recited in claim 1, a boundary part between the first region and the second region is located at a substantially central part of the width dimension in the distal end or above the substantially central part.

According to a tillage tine recited in claim 3 of the present invention, in the tillage tine recited in claim 1 or claim 2, a dimension from a reference surface that is curved in one direction with a surface of the base portion as a reference, to the lower end of the width dimension in the distal end in plan view, is a curved height, and a boundary part between the first region and the second region is set so as to come close to a hypothetical line that is passing through the lower end and parallel to the lateral blade curve start portion.

According to a tillage tine recited in claim 4 of the present invention, in the tillage tine recited in claim 1 or claim 2, a dimension from a reference surface that is curved in one direction with a surface of the base portion as a reference, to the substantially central part of the width dimension of the distal end in plan view is a curved height.

The tillage tine of the present invention suppresses a load fluctuation during driving into soil, reduces tilling vibration or horsepower consumption, and is excellent in a throwing force, reversibility, and a deep tillage performance.

### Brief Description of Drawings

[Figure 1] Figure 1 is a side view and a partial X-X sectional view of a tillage tine according to an embodiment of the present invention.
[Figure 2] Figure 2 is a schematic diagram during tilling work of the tillage tine according to the embodiment of the present invention.
[Figure 3] Figure 3 is a side view and a partial X-X sectional view of a tillage tine of another mode according to the embodiment of Figure 1 of the present invention.
[Figure 4] Figure 4 is a side view and a partial X-X sectional view of a tillage tine of further another mode according to the embodiment of Figure 1 of the present invention.
[Figure 5] Figure 5 is a side view and a partial X-X sectional view of a tillage tine according to another embodiment of the present invention.
[Figure 6] Figure 6 is a side view and a partial X-X sectional view of a tillage tine of another mode according to the embodiment of Figure 5 of the present invention.
[Figure 7] Figure 7 is a side view and a partial X-X sectional view of a tillage tine of further another mode according to the embodiment of Figure 5 of the present invention.

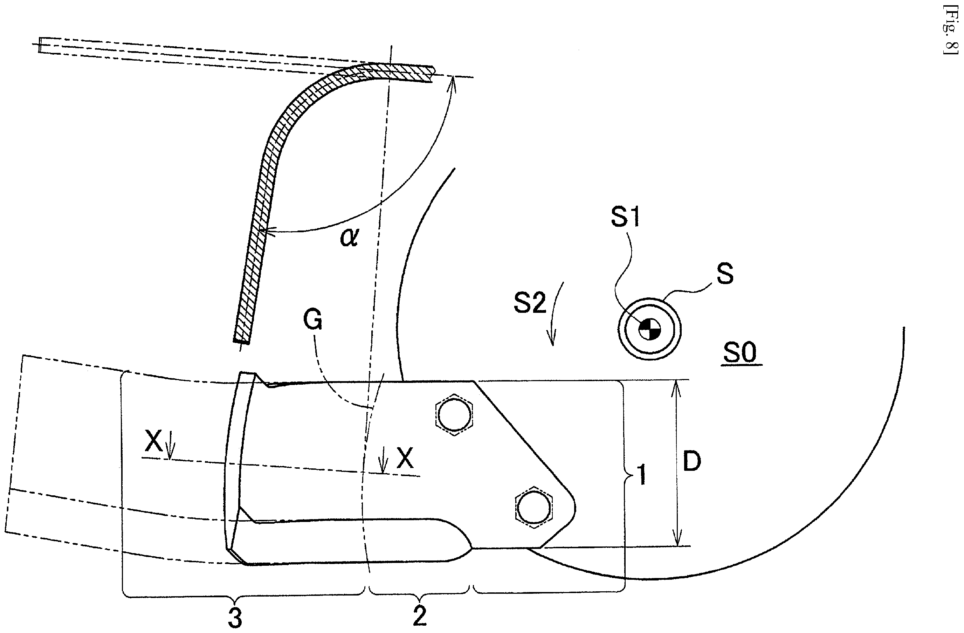

[Figure 8] Figure 8 is a side view and a partial X-X sectional view of a conventional tillage tine.
[Figure 9] Figure 9 is a schematic diagram during tilling work of the conventional tillage tine.

### Description of Embodiment

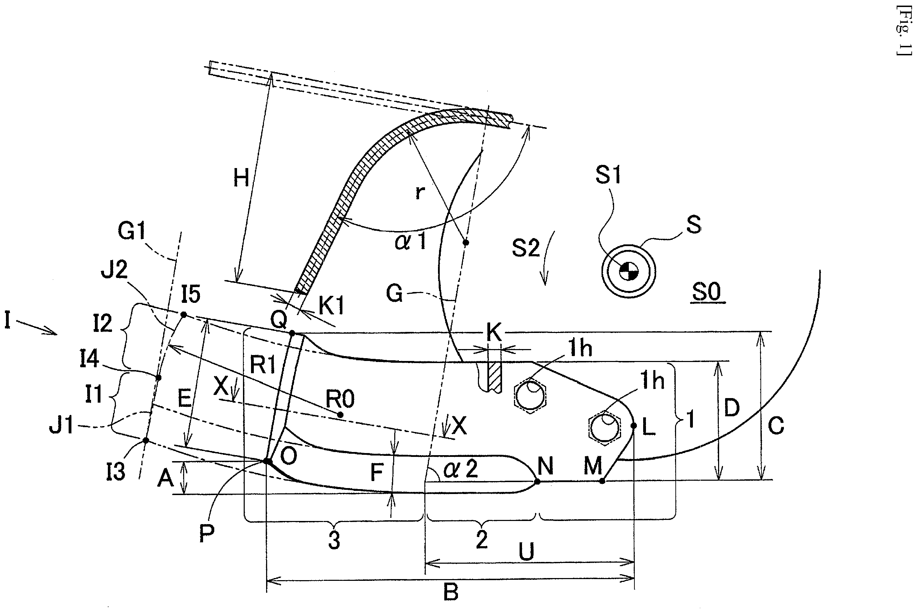

Hereinafter, a tillage tine in an embodiment of the present invention will be described based on the drawings. In the tillage tine, a surface directly confronting a rotation trajectory of a rotary tine shaft S, namely, a surface having a rotation axis of the rotary tine shaft S as a normal line is set as a side surface. In the side surface, when a base portion extends in a shaft diameter direction of the rotary tine shaft S, a surface directly confronting an extending direction in which a vertical blade portion extends in a lateral direction from the base portion is set as a front surface direction. In front view (not illustrated) observed from the front surface direction, the tillage tine curves in a right direction. Further, as shown in Figure 1, the tillage tine curves in a front direction (a front direction of the paper surface) as one faces it in side view.

### Embodiments

The tillage tine according to the present invention is fitted to a flange S0 with the rotary tine shaft S of a rotary main body in a tiller as an axis, as shown in Figure 1. In the tillage tine, a base portion 1, a vertical blade portion 2 extending continuously in a lateral direction from the base portion 1, and a lateral blade portion 3 that extends continuously from the vertical blade portion 2 with a lateral blade curve start portion G as a boundary are configured integrally.

As shown in Figure 1, in side view, the tillage tine is formed from a planar plate that curves to be gradually away from a rotational direction S2 of a rotation center S1 in the rotary tine shaft S from the base portion 1 to the lateral blade portion 3. Namely, the planar plate is formed by being curved gradually toward an upper side from the base portion 1 to the lateral blade portion 3. More specifically, the planar plate is formed by including a width dimension that is not less than a width dimension of the base portion 1 from the vertical blade portion 2 to a distal end I side of the lateral blade portion 3, and is also formed by being gradually curved toward the upper side. The tillage tine is configured by the planar plate being curved by a curving curvature radius r at the lateral blade curve start portion G. Thereby, the base portion 1 and the vertical blade portion 2 are formed from a planar plate, and the lateral blade portion 3 is formed from a curved plate.

The base portion 1 refers to a region from a lateral direction rear end position L to a cutting edge start end N in the base portion. The cutting edge start end N is located on a lower edge that is located at a lower side from the lateral direction rear end position L of the base portion, and at a distal end side in the lateral direction (a left direction in Figure 1), along the lower edge from the lower edge rear end position M of the base portion.

The base portion 1 is fitted by being mounted to the flange S0. The base portion 1 is provided with a mounting hole 1h for being mounted to the flange S0. At least one or a plurality of mounting holes 1h is or are desired to be provided.

Further, of both side surfaces of the base portion 1, a side surface at an opposite side from the curving direction is set as a reference surface. The reference surface is a reference for a curving height H of the lateral blade portion 3 being curved by the curving curvature radius r. At this time, the curving curvature radius r may be formed from one or a plurality of the curving curvature radii such that a plane part is not formed in the lateral blade portion 3.

The vertical blade portion 2 extends continuously in the lateral direction from the base portion 1, and refers to a region from the cutting edge start end N to the lateral blade curve start portion G. A wall thickness of the vertical blade portion 2 may be the same thickness from the base portion 1 to the lateral blade curve start portion G, or may be set to be sequentially thinner. Further, the vertical blade portion 2 has a blade continuing to the lower edge. A lowermost edge of the vertical blade portion 2 is formed by providing a step at a lower side from the lower edge of the base portion 1 where the lower edge rear end position M and the cutting edge start end N are located.

The lateral blade portion 3 refers to an entire region from the lateral blade curve start portion G to a distal end I, and is formed from a curved plate that is curved continuously to one side with respect to the reference surface. The curved plate is in a curved shape that bends upward to the distal end I in side view. Namely, the lateral blade portion 3 connects to the vertical blade portion 2 with the lateral blade curve start portion G as a boundary, and mainly extends in the lateral direction and also curves upward in side view.

Further, the lateral blade portion 3 is formed to have a width that is substantially equivalent to a base portion width D or larger than the base portion width D toward the before curving distal end I. For example, the lateral blade portion 3 may be formed so that a lateral blade portion distal end width E that will be described later has a substantially equivalent width dimension to the width dimension of the vertical blade portion 2 including a blade width F of the vertical blade portion 2, or may be formed to be wide from the width dimension of the vertical blade portion 2 including the blade width F of the vertical blade portion 2 to the lateral blade portion distal end width E. The width dimension of the vertical blade portion 2 including the blade width F of the vertical blade portion 2 intends to also include the blade width of the nearby vertical blade portion 2 in the cutting edge start end N. The blade width F excluding the blade width of the nearby vertical blade portion 2 in the cutting edge start end N that will be described later indicates a maximum blade width. When the width dimension of the vertical blade portion 2 including the blade width F of the vertical blade portion 2 and the lateral blade portion distal end width E are formed to be substantially equivalent to each other, the lateral blade portion 3 may be formed with a constant maximum blade width from the vertical blade portion 2 to the lateral blade portion 3. A wall thickness of the lateral blade portion 3 may be the same thickness from the lateral blade curve start portion G to the distal end I, or may be set so that the thickness becomes thinner in sequence.

The distal end I of the lateral blade portion 3 before curving includes a first region I1 which extends upward from a lower end 13 of the lateral blade portion 3, and a second region 12 which is continuous from the first region I1, and is curved or bent in the inward direction on the base portion 1 side to extend to an upper end 15. The distal end I of the lateral blade portion 3 before curving is formed such that a dimension from the reference surface curved in one direction with the surface of the base portion 1 as a reference, to the lower end 13 (lower end 13 of the first region I1) of the width dimension in the distal end I in plan view becomes the curved height H.

More specifically, the distal end I of the lateral blade portion 3 before curving includes the first region I1 which extends upward to the inward direction on the base portion 1 side from the lower end 13 of the lateral blade portion 3, and the second region 12 which is further curved or bent toward the inward direction from the upper end of the first region I1 to be continuously formed. Additionally, a boundary part 14 between the first region I1 and the second region 12 is located at a substantially central part of the width dimension of the distal end I or above the substantially central part, and is set so as to come close to a virtual line G1 parallel to the lateral blade curve start portion G passing through the lower end I3. That is, the boundary part 14 is set such that the dimension from the reference surface to the boundary part 14 is substantially the same as the curved height H in plan view. The first region I1 and the second region 12 are formed by combining one or a plurality of straight lines, an arc, and the like.

Specifically, as illustrated in Figure 1, the lateral blade portion 3 before curving is formed from a first straight line part J1 which forms the first region I1 from the lower end 13 of the distal end I serving as a base point of the curved height H to the substantially central part of the width dimension, and an arc part J2 which forms the second region 12 continuously reaching the upper end I5 from the first straight line part J1.

The first straight line part J1 passes through the lower end 13 of the distal end I in the lateral blade portion 3 before curving, and is parallel to the lateral blade curve start portion G, or extends upward in the inward direction with respect to the virtual line G1 parallel to the lateral blade curve start portion G, and extends such that an upper end part of the first straight line part J1 comes close to the virtual line G1. That is, the first straight line part J1 extends such that the dimension from the reference surface to the upper end part of the first straight line part J1 is substantially equal to the curved height H, in plan view. The arc part J2 is continuous to the first straight line part J1, and further curved in the inward direction, and has a radius R1 passing through the upper end I5 of the distal end I and having a center R0 as the center. At this time, the center R0 is provided above the substantially central part of the base portion width D. The boundary part 14 between the first straight line part J1 and the arc part J2 is provided so as to be located at the substantially central part of the width dimension in the distal end I. Additionally, the arc part J2 may be formed from a plurality of arcs having different sizes, and the center R0 may be provided at the substantially central part of the base portion width D. Furthermore, the boundary part 14 may be provided so as to be located above the substantially central part of the width dimension in the distal end I.

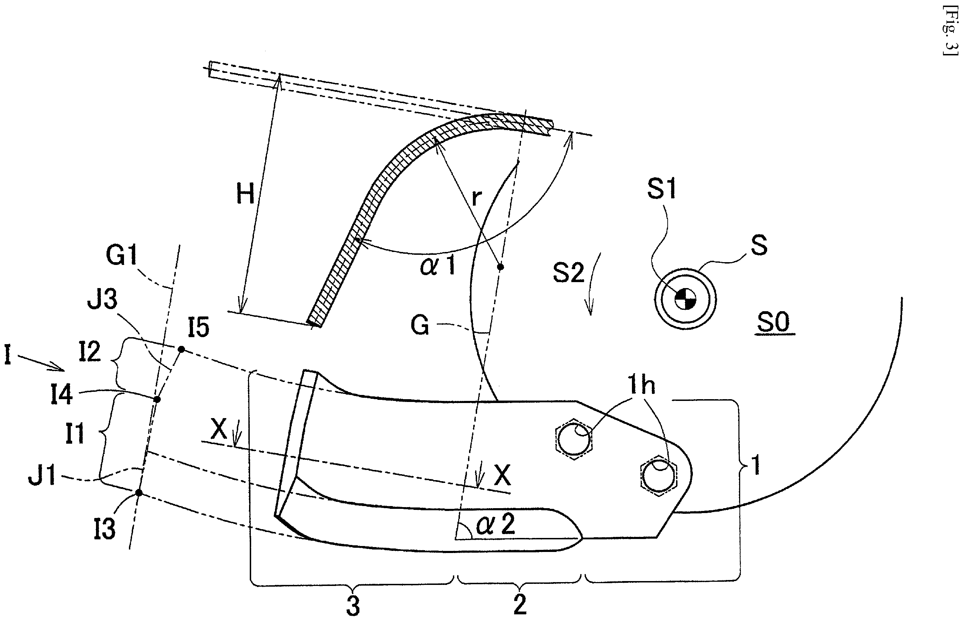

Furthermore, in the shape of the distal end I in the lateral blade portion 3, the second region 12 may be, for example, a second straight line part J3 which is continuous from a first straight line part J1 forming a first region I1, and further bent in the inward direction to pass through an upper end I5 of the distal end I, as illustrated in Figure 3. At this time, a boundary part 14 between the first straight line part J1 and the second straight line part J3 is provided so as to be located above the substantially central part of the width dimension in the distal end I. The boundary part 14 is provided so as to come close to the virtual line G1 which passes through the lower end 13 of the distal end I and is parallel to the lateral blade curve start portion G. That is, the boundary part 14 is provided such that the dimension from the reference surface to the boundary part 14 is substantially equal to the curved height H in plan view. Additionally, the second straight line part J3 may be formed from a plurality of straight lines. Furthermore, the boundary part 14 may be provided so as to be located at the substantially central part of the width dimension in the distal end I.

Such a lateral blade portion 3 is curved at the lateral blade curve start portion G, so that the lower end 13 of the distal end I can be made to be the base point of the curved height H. Additionally, the upper end I5 of the distal end I of the lateral blade portion 3 before curving is provided so as to be located in the inward direction (base portion 1 side) with respect to the virtual line G1 which passes through the lower end 13 and is parallel to the lateral blade curve start portion G, and the upper end part of the first straight line part J1 (i.e., the boundary part 14) forming the first region I1 is provided so as to be located at the substantially central part of the width dimension of the distal end I or above the substantially central part.

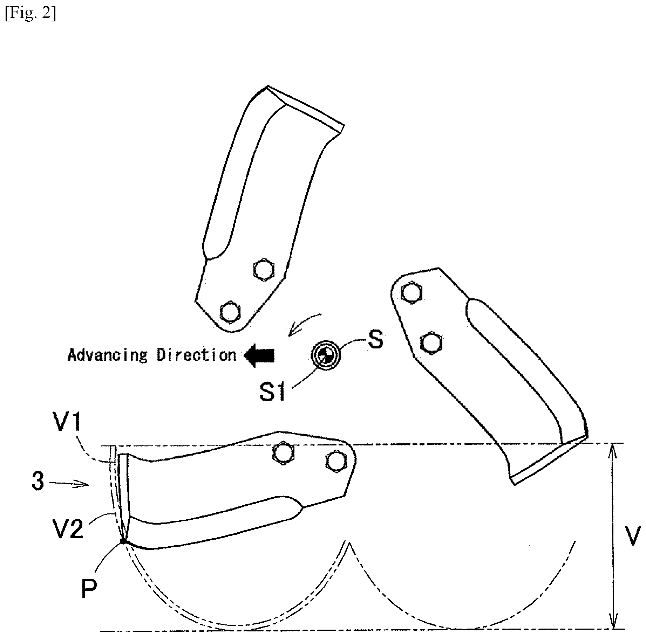

Consequently, the upper end I5 of the distal end I in the lateral blade portion 3 can be located on the reference surface side in plan view. Additionally, as illustrated in Figure 2, even in a case where abrasion on the blade side of the lateral blade portion 3 progresses, the outside surface of the lateral blade portion 3 can be prevented from coming into contact with a plow sole surface V2 after soil cutting in an early stage, the plow sole surface V2 after soil cutting being formed by the blade edge distal end P of the lateral blade portion 3, (in this figure, V1 is the same as the plow sole surface V1 in the conventional tillage tine.).

In the distal end I of the lateral blade portion 3, it is possible to sufficiently secure the first region I1 up to at least the substantially central part of the width dimension of the distal end I. Therefore, even in a case where the abrasion on the blade side of the lateral blade portion 3 progresses, it is possible to secure a predetermined interval with a tillage tine installed to be adjacent, and it is possible to suppress reduction in workability.

### (Entire shape in side view and ratio of tillage clearance length A)

In regard with an entire shape of the tillage tine in side view, as shown in Figure 1, when a vertical distance from the lowermost edge of the vertical blade portion 2 to a lateral direction distal end position O of a lateral blade portion cutting edge is set as a tillage clearance length A, a horizontal distance from a lateral direction rear end position L of the base portion to a cutting edge distal position P of the lateral blade portion is set as an entire lateral length B, and a vertical distance from the lower edge of the base portion 1 to a top portion Q of the lateral blade portion is set as an entire vertical length C, a ratio of the tillage clearance length A, the entire lateral length B, and the entire vertical length C is preferably about 1 : 5 to 30 : 2 to 13. Further, a ratio of the tillage clearance length A and the base portion width D is preferably about 1 : 1.5 to 12, and more preferably about 1 : 3 to 10.

### (Entire shape in side view and ratio of lateral blade portion distal end width E)

Further, as shown in Figure 1, when a distance from the lateral direction distal end position O of the lateral blade portion cutting edge to the top portion Q of the lateral blade portion is set as a lateral blade portion distal end width E, a ratio of the base portion width D, the lateral blade portion distal end width E, and an entire vertical length C is preferably about 1 : 1 to 2 : 1 to 2.

Namely, the lateral blade portion distal end width E is substantially equivalent to the base portion width D or slightly larger than the base portion width D. Thereby, a curving shape of the cutting edge is not formed by cutting the planar plate before curved from the base portion 1 to the lateral blade portion 3 so that the lateral blade portion distal end width E becomes narrow in the cutting edge side, but the cutting edge can be curved upward in side view. Further, the width dimension from the lateral blade curve start portion G to the distal end I of the lateral blade portion 3 where abrasion at the time of tillage is very hard is formed to be large, and therefore, life of the tillage tine can be extended. Furthermore, since the throwing force at the time of tillage is increased, reversibility, plowing-in performance, soil crushing performance and land leveling performance can be improved.

### (Cutting edge shape in side view)

A cutting edge shape in side view from the cutting edge start end N of the vertical blade portion 2 to the lateral direction distal end position O of the lateral blade portion cutting edge is constituted of a curved line of a noncircular arc as a whole, which is continuously changed in curvature. Note that the curved line may be the one with a plurality of circular arc curved lines connected as long as the curved line is a noncircular arc as a whole. Further, except for the blade width of the nearby vertical blade portion 2 in the cutting edge start end N, the ratio of the blade width F and the base portion width D is preferably about 1 : 3 to 10. Namely, the blade width F mentioned in the ratio to the base portion width D indicates the maximum blade width.

In the present tillage tine, a single-edged tine with a blade formed on only one side surface in the curving direction is adopted as shown in Figure 1, but other than this, a double-edged tine with blades formed on both side surfaces, and a single-edged tine with a blade formed on only one side surface in an opposite direction from the curving direction may be adopted.

### (Curve)

As shown in Figure 1, the lateral blade portion 3 is curved by a curving curvature radius r with respect to the reference surface, via the lateral blade curve start portion G, and curved at a curving angle α1 which is an obtuse angle in the cross-section view orthogonal to the lateral blade curve start portion G. Furthermore, a ratio of the curving height H of the lateral blade portion 3 from the reference surface and the entire lateral length B is preferably about 1 : 1.1 to 2.5.

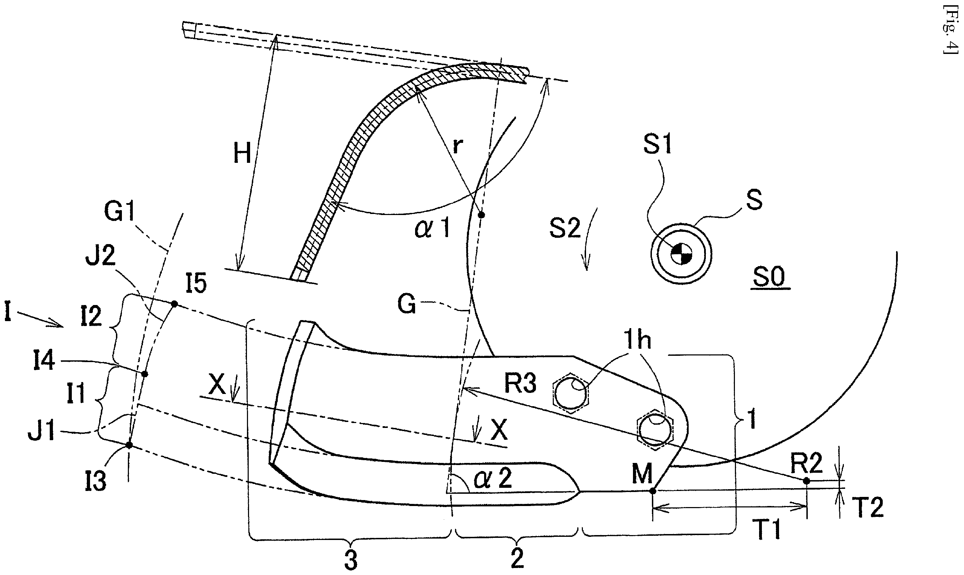

The lateral blade curve start portion G has a straight line shape as illustrated in Figure 1 and Figure 3, or has an arcuate shape having a bending radius R3 with a bending center R2 located on the base portion 1 side as the center as illustrated in Figure 4.

In a case where the lateral blade curve start portion G is a straight line, when a distance from the lateral rear end position L of the base portion 1 to a point at which the lateral blade curve start portion G passes through the lowermost edge of the base portion 1 is defined as a curving start horizontal distance U in side view as illustrated in Figure 1 and Figure 3, the ratio of the curving start horizontal distance U and the entire lateral length B is preferably about 1:1.1 to 3. Furthermore, an angle α2 formed by a line passing through the lowermost edge of the base portion 1 and the lateral blade curve start portion G is an acute angle.

In a case where the lateral blade curve start portion G is an arc, when a distance from the lower edge rear end position M of the base portion 1 to the bending center R2 is defined as a horizontal distance T1 in side view as illustrated in Figure 4, the ratio of the entire lateral length B, the horizontal distance T1, and the bending radius R3 is preferably about 1:0.07 to 3:0.5 to 3.5, and is more preferably about 1:0.08 to 1:0.5 to 1.5.

When a vertical distance from the lower edge of the base portion 1 to the bending center R2 is defined as a vertical distance T2, the ratio of the vertical distance T2 and the base portion width D is preferably about 1:2 to 80. That is, the position of the bending center R2 is provided below the substantially central part of the base portion width D. At this time, this means that the position of the bending center R2 may be located below the substantially central part of the base portion width D, and it is of course that the position of the bending center R2 may be located below the lower edge of the base portion 1. Thus, the lateral blade portion 3 curved by the lateral blade curve start portion G formed from the arc having the bending radius R3 is curved so as to have the obtuse angle in the cross-section view orthogonal to the lateral blade curve start portion G.

### (Wall thickness)

A wall thickness of the tillage tine is set so that the thickness becomes sequentially thinner from the base portion 1 to the lateral blade portion 3. More specifically, the thickness is set to be sequentially thinner from the base portion 1 to the distal end I of the lateral blade portion 3. When a wall thickness of the base portion 1 is set as a base portion thickness K, and a wall thickness of the distal end I in the lateral blade portion 3 is set as a lateral blade portion distal end thickness K1 in side view of Figure 1, a ratio of the base portion thickness K and the lateral blade portion distal end thickness K1 is preferably 1 : 0.6 to 1. When abrasion resistance in the distal end I of the lateral blade portion 3 is taken into consideration, the ratio is preferably set at 1 : 0.5 to 1.

Thereby, stress to the base portion 1 can be relieved, and therefore, strength to breakage and bending of the tillage tine can be improved. Further, since proper spring characteristics are added to as far as the distal end I of the lateral blade portion 3, tilling vibration is reduced, and breakage of the mounting bolt and the flange S0, the rotary tine shaft S, and the rotary main body is prevented as a result. Moreover, the spring characteristics add a proper reaction force to soil to be cultivated, and therefore reversibility, plowing-in performance and soil crushing performance are improved as a result.

According to the tillage tine according to the present invention described above, the lateral blade portion 3 is curved so as to form an obtuse angle in the cross-section view orthogonal to the lateral blade curve start portion G, and is formed from the first region I1 in which the distal end I of the lateral blade portion 3 before curving extends upward from the lower end 13 of the lateral blade portion 3 in the side view, and the second region 12 which is continuous from the first region I1 and is curved or bent in the inward direction to extend to the upper end I5 in the side view. Consequently, it is possible to locate the upper end I5 of the distal end I to the reference surface side in plan view with the curving of the lateral blade portion 3, and it is possible to suppress a load fluctuation during driving into soil, to reduce tilling vibration or horsepower consumption, and to attain the tillage tine which is excellent in throwing force, reversibility, and a deep tillage performance.

Further, since the contact position of the cutting edge in the tillage tine to soil is gradually shifted to the distal end I side in the tillage time, the clods that are being cut are difficult to hit by the cutting edge, and therefore, uniformity of clods and land preparation performance are improved.

Moreover, since the contact position of the cutting edge in the tillage tine to soil is gradually shifted to the distal end I side at the tillage time, even if straws, grass and the like contact the cutting edge, the straws, grass and the like can be smoothly discharged to the distal end side, and can be cut. As a result, entanglement hardly occurs to the cutting edge, and therefore, the tillage tine with excellent plowing-in performance is provided.

The present invention is not limited to the configurations of the above embodiments, and can be implemented by appropriately changing a shape, a dimension, a material or the like. For example, in the distal end I of the lateral blade portion 3, the dimension from the reference surface curved in one direction with the surface of the base portion 1 as a reference to the substantially central part of the width dimension of the distal end I in plan view may be made to be the curved height H.

More specifically, the distal end I of the lateral blade portion 3 includes the first region I1 which extends from the lower end 13 of the distal end I of the lateral blade portion 3 in the outward direction toward a part serving as a base point of the curved height H, and the second region 12 which is continuously formed by being curved or bent from the upper end part of the first region I1 serving as the base point toward the inward direction. Additionally, the boundary part 14 between the first region I1 and the second region 12 is set so as to be located at the substantially central part of the width dimension of the distal end I or above the substantially central part. Furthermore, the upper end I5 of the distal end I is provided so as to pass through the substantially central part of the width dimension in the distal end I, and to be located in the inward direction on the base portion 1 side with respect to the virtual line G1 parallel to the lateral blade curve start portion G. The first region I1 and the second region 12 are formed by combining one or a plurality of straight lines, an arc, and the like.

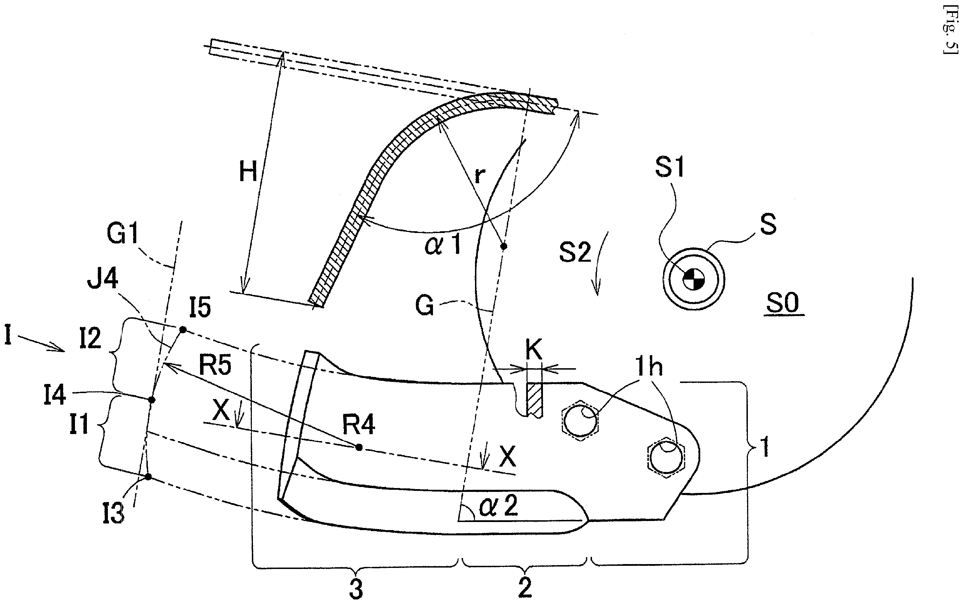

Specifically, as illustrated in Figure 5, in the lateral blade portion 3 before curving, the first region I1 and the second region 12 are formed from a continuous one arc part J4, and the virtual line G1 parallel to the lateral blade curve start portion G is formed so as to be in contact with the substantially central part of the width dimension of the distal end I. The distal end I is formed from an arc having a radius R5 with a center R4 located on the base portion 1 side as the center, and the center R4 is provided above the substantially central part of the base portion width D. Additionally, the arc part J4 may be formed from a plurality of arcs having different sizes, and the center R4 may be provided at the substantially central part of the base portion width D. Furthermore, the boundary part 14 may be provided so as to be located at the substantially central part of the width dimension of the distal end I or above the substantially central part.

Such a lateral blade portion 3 is curved at the lateral blade curve start portion G, so that the substantially central part of the width dimension in the distal end I may be made to be the base point of the curved height H. Consequently, similarly to the above embodiment, the upper end I5 of the distal end I of the lateral blade portion 3 may be located on the reference surface side in plan view. Additionally, even in a case where abrasion on the blade side of the lateral blade portion 3 progresses, the outside surface of the lateral blade portion 3 can be prevented from coming into contact with a plow sole surface after soil cutting in an early stage, the plow sole surface after soil cutting being formed by the blade edge distal end P of the lateral blade portion 3.

In the distal end I of the lateral blade portion 3, it is possible to sufficiently secure the first region I1 from the lower end 13 of the lateral blade portion 3 to at least the substantially central part of the width dimension in the distal end I. Therefore, even in a case where the abrasion on the blade side of the lateral blade portion 3 progresses, it is possible to secure a predetermined interval with a tillage tine installed to be adjacent, and it is possible to suppress reduction in workability.

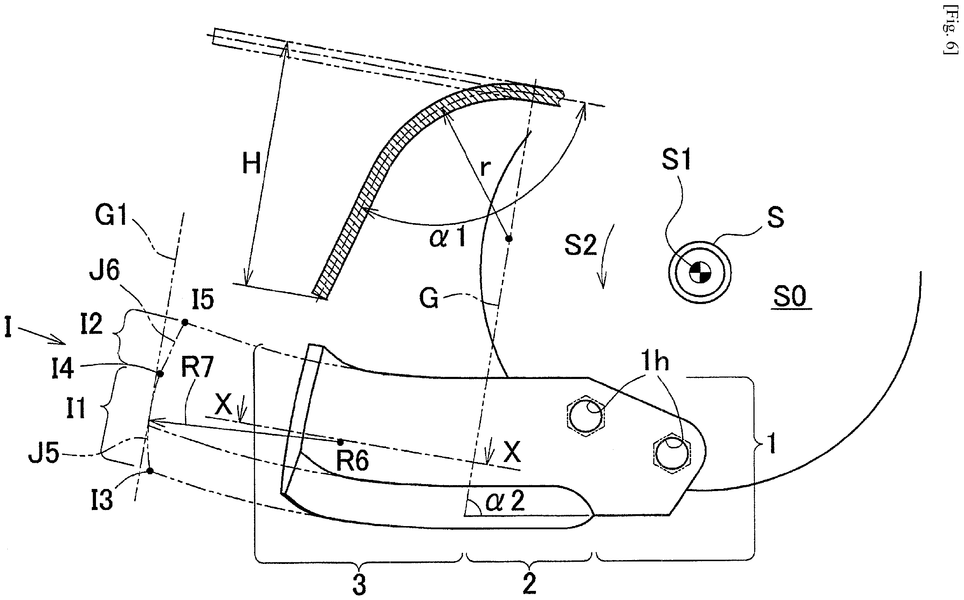

For example, as illustrated in Figure 6, one or a plurality of arcs and one or plurality of straight lines may be combined. At this time, for example, the shape of the distal end I is formed from an arc part J5 which forms the first region I1 from the lower end 13 to the substantially central part of the width dimension of the distal end I serving as the base point of the curved height H, and a straight line part J6 which forms the second region 12 which is continuous from the arc part J5 to reach the upper end 15.

The arc part J5 is formed by a radius R7 passing through the lower end 13 of the distal end I of the lateral blade portion 3 before curving and having a center R6 as the center, and the straight line part J6 is continuous to the arc part J5, and extends in the inward direction to pass through the upper end I5 of the distal end I. At this time, the center R6 is provided above the substantially central part of the base portion width D. Additionally, a boundary part 14 between the arc part J5 and the straight line part J6 is provided so as to be located above the substantially central part of the width dimension of the distal end I. Additionally, the center R6 may be provided at the substantially central part of the base portion width D, and the boundary part 14 may be provided so as to be located at the substantially central part of the width dimension of the distal end I.

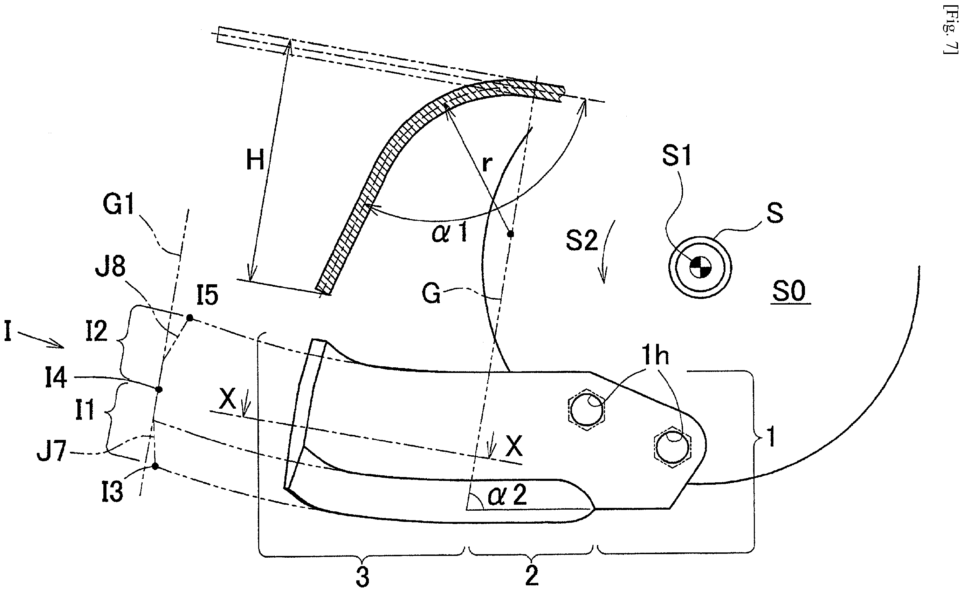

Furthermore, for example, as illustrated in Figure 7, a plurality of straight lines may be combined. At this time, for example, the shape of the distal end I is formed from a first bent part J7 which forms the first region I1 from the lower end 13 to the substantially central part of the width dimension in the distal end I serving as the base point of the curved height H, and a second bent part J8 which forms the second region 12 which is continuous from the first bent part J7 to reach the upper end 15.

The first bent part J7 is formed from a first straight line which passes through the lower end 13 of the distal end I of the lateral blade portion 3 before curving, and extends in the outward direction, and a second straight line which is continuous to the first straight line, and is parallel to the lateral blade curve start portion G. Additionally, the second bent part J8 is formed from a third straight line which is continuous to the first bent part J7, and is parallel to the lateral blade curve start portion G, and a fourth straight line which is continuous to the third straight line, and extends in the inward direction to pass through the upper end I5 of the distal end I. At this time, the third straight line and the fourth straight line are set to be located at the substantially central part of the width dimension in the distal end I. A boundary part 14 between the first bent part J7 and the second bent part J8 is provided so as to be located at the substantially central part of the width dimension in the distal end I. Additionally, the boundary part 14 may be provided so as to be located above the substantially central part of the width dimension in the distal end I.

The thus formed distal end I of the lateral blade portion 3 intends to be formed such that the part serving as the base point of the curved height H is located at the substantially central part of the width dimension of the distal end I of the lateral blade portion 3. Additionally, the boundary part 14 between the first region I1 and the second region 12 intends to be set so as to be located at the substantially central part of the width dimension in the distal end I or above the substantially central part, and the upper end I5 of the distal end I intends to be provided so as to be located in the inward direction on the base portion 1 side with respect to the virtual line G1 which passes through the substantially central part of the width dimension in the distal end I, and is parallel to the lateral blade curve start portion G. Furthermore, it is of course that the lateral blade curve start portion G may have a straight line shape or may have an arcuate shape.

Further the configuration can be partially omitted, and a configuration partially extracted can be adopted, as a matter of course.

## Claims

1. A tillage tine comprising:
a base portion (1) that is fitted to a flange (SO) of a rotary tine shaft (S);
a vertical blade portion (2) that is formed from a planar plate that extends continuously in a lateral direction from the base portion (1) in side view to a lateral blade curve start portion (G) when a surface having a rotation axis of the rotary tine shaft (S) as a normal line is set as a side surface, and includes a cutting edge that is formed at a lower side via a step from a lower edge of the base portion (1); and
a lateral blade portion (3) that extends continuously from the vertical blade portion (2) with the lateral blade curve start portion (G) as a boundary, is formed by including a width dimension not less than a width dimension of the base portion (1) from the vertical blade portion (2) to a distal end (I) side, is formed by gradually curving to an upper side in side view, and is formed from a curved plate that is curved on one side with the lateral blade curve start portion (G) as the boundary, wherein
the lateral blade portion (3) is curved so as to form an obtuse angle in cross-section view orthogonal to the lateral blade curve start portion (G), and
the distal end (I) of the lateral blade portion (3) before curving includes a first region (I1) which extends upward from a lower end (I3) of the lateral blade portion (3), and a second region (12) which is continuous from the first region (I1), and is curved or bent in an inward direction to extend to an upper end (I5).

2. The tillage tine according to claim 1, wherein
a boundary part (14) between the first region (I1) and the second region (12) is located at a substantially central part of the width dimension in the distal end (I) or above the substantially central part.

3. The tillage tine according to claim 1 or claim 2, wherein
a dimension from a reference surface that is curved in one direction with a surface of the base portion (1) as a reference, to the lower end (I3) of the width dimension in the distal end (I) in plan view, is a curved height (H), and a boundary part (14) between the first region (I1) and the second region (12) is set so as to come close to a hypothetical line that is passing through the lower end (I3) and parallel to the lateral blade curve start portion (G).

4. The tillage tine according to claim 1 or claim 2, wherein
a dimension from a reference surface that is curved in one direction with a surface of the base portion (1) as a reference, to the substantially central part of the width dimension of the distal end (I) in plan view is a curved height (H).
